# EUROPEAN PATENT SPECIFICATION

(11) **EP 1 559 829 B1**
(45) Date of publication and mention of the grant of the patent: **26.12.2007**
(21) Application number: 04017167.0
(22) Date of filing: 21.07.2004
(51) Int. Cl.: D06F 58/28

(54) **Drying method and device**
Trockungsverfahren und Wäschetrockner
Procédé de séchage et sèche-linge

(30) Priority: 28.01.2004 EP 04425051
(43) Date of publication of application: 03.08.2005
(73) Proprietor: Candy S.p.A., 20052 Monza (MI) (IT)
(72) Inventor: Fumagalli, Silvano, 20052 Monza (Milano) (IT)
(74) Representative: Vittorangeli, Lucia

(56) References cited:
- EP-A- 0 503 586
- JP-A- 59 228 897
- US-A- 4 549 362
- PATENT ABSTRACTS OF JAPAN vol. 2003, no. 02, 5 February 2003 (2003-02-05) -& JP 2002 282595 A (TOTO LTD), 2 October 2002 (2002-10-02)
- PATENT ABSTRACTS OF JAPAN vol. 016, no. 054 (C-0909), 12 February 1992 (1992-02-12) -& JP 03 254797 A (HITACHI LTD), 13 November 1991 (1991-11-13)
- PATENT ABSTRACTS OF JAPAN vol. 2000, no. 04, 31 August 2000 (2000-08-31) & JP 2000 005493 A (HITACHI LTD), 11 January 2000 (2000-01-11)

## Description

The present invention relates to a method for drying laundry as well as a drying device of the drying machine or washer-dryer types, which dries the laundry by means of an air flow.

The drying circuit of these drying devices typically comprises a drying space separate from the external environment, such as a basket/tank unit, an intake unit, a heat exchanger and a heating unit with electric resistances.

In a drying circuit known as the closed circuit, the air flow supplied by the intake unit is heated by the electric resistances and conveyed to the basket or drum, where, by flowing through the wet laundry, it causes the water contained in the fabrics to evaporate. In the heat exchanger, generally of the atmospheric type, wet air is cooled either by a cold water flow or a cool air flow. Due to the cooling, the vapour condensates and is collected and released together with the cooling water. The de-humidified air is then drawn in by the intake unit and caused to recirculate.

On the other hand, in the case of a drying circuit known as the open circuit, the drying air is drawn in from the environment and, after flowing through the laundry, thus absorbing the moisture thereof, it is directly released to the environment.

The closed-circuit drying devices have a high energy consumption and offer a low-medium drying performance. The open-circuit drying devices, though having a lower energy consumption and offering a better drying performance than those with closed-circuit, can be operated only in rooms provided with a sufficient ventilation, and most of them require a forced ventilation.

Drying machines for domestic use are also known which have an open-circuit base appliance having intake and release ports to which a separate optional device can be coupled from the outside to convert the drying machine into a closed-circuit condensing device.

Both the condensing and the convertible drying machines are structurally complex and expensive, and the convertible devices allow the open-to-closed conversion of the system to be performed only before installation, for example in a laundry, because this conversion entails changing the size of the drying machine.

A further drawback of the prior art drying machines lies in that they are designed for unchanged environmental conditions, whereas ventilation, temperature, and moisture in the room where a drying machine is typically installed are actually variable, both in the course of a day and over one year, and further they strongly depend on the inhabitants' habits of heating and ventilation.

JP 2002282595 discloses a clothes dryer and corresponding process according to the preamble of claims 1 and 12, respectively.

Accordingly, drying machines almost never operate in the exact conditions they have been designed for, and therefore they offer a non-optimum overall energy performance.

Therefore, the object of the present invention is to provide a drying method to be implemented in a drying device having such characteristics as to improve the overall energy performance and allow the drying device to be operated in variable environmental conditions.

This and other objects are achieved by means of a method for drying wet laundry contained in a drying space at least partially isolated from an external environment, the method comprising the steps below:
- conveying a drying air flow to the drying space such that said drying air skims the laundry to be dried in order to extract at least part of the moisture therefrom;
- removing wet air from the drying space;
- measuring the air moisture in the external environment;
- adjusting, as a function of the measured moisture, the flow rate of a recirculated air flow consisting of at least a part of the air removed from the drying space and reintroducing said recirculated air flow, after it has been at least partially de-humidified, to the drying air flow, particularly,
- comparing the measured moisture value with a reference lower threshold value, and
- in the case where the measured moisture value is lower than the lower threshold value,
- releasing all the air removed from the drying space to the external environment and drawing in a corresponding amount of air from the external environment to form the drying air flow, and
- in the case where the measured moisture value is higher than the lower threshold value,
- extracting at least part of the moisture from the air removed from the drying space and
- reintroducing at least part of the air removed from the drying space, after at least part of the moisture has been extracted therefrom, to the drying air flow.

The method according to the invention can be carried out by means of a laundry-drying device according to claim 9.

In order to better understand the invention and appreciate the advantages thereof, some embodiments thereof will be described herein below by way of nonlimiting examples with reference to the annexed figures, in which:

figure 1 is a multi-level longitudinal sectional schematic view of a drying machine according to the invention in a first use configuration;

figure 2 is a multi-level cross-sectional schematic view of the drying machine from figure 1;

figure 3 is a multi-level longitudinal sectional schematic view of a drying machine according to the invention in a second use configuration;

figure 4 is a multi-level cross-sectional schematic view of the drying machine from figure 3;

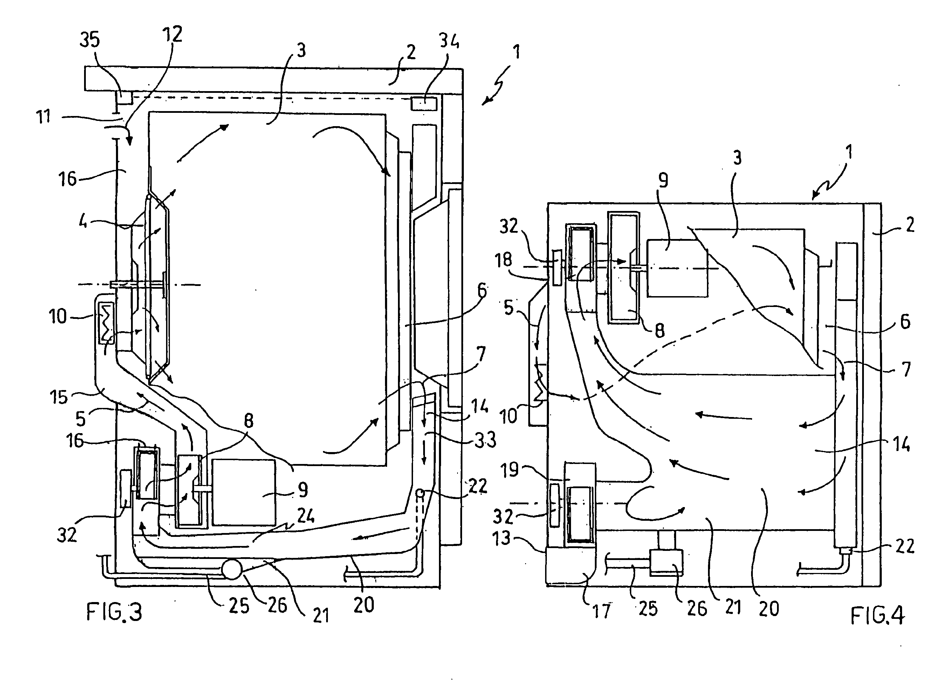

f igure 5 is a sectional view of a detail of the drying machine from figures 3 and 4;

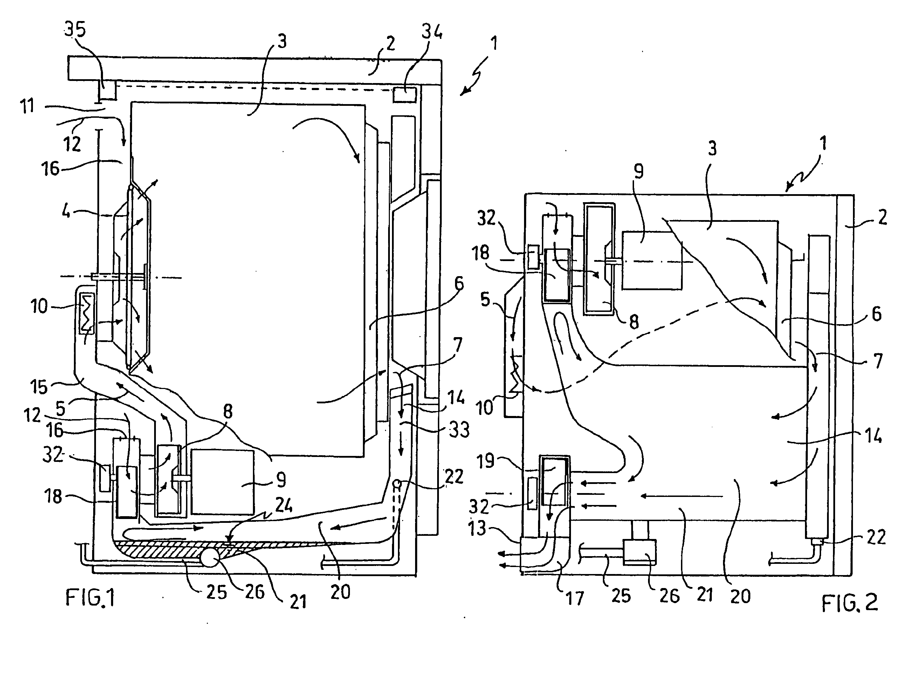

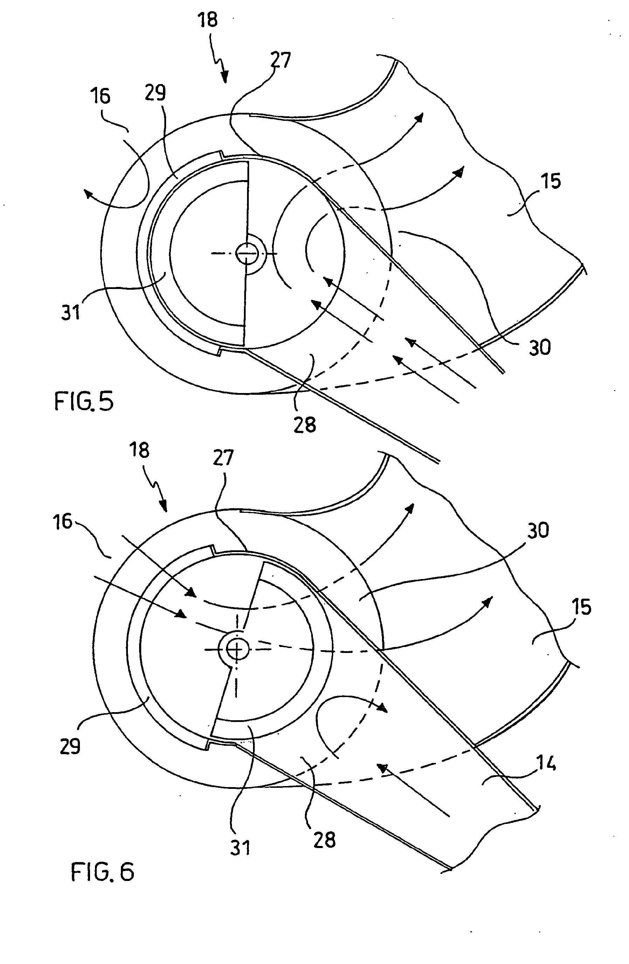

figure 6 is a sectional view of a detail of the drying machine from figures 1 and 2;

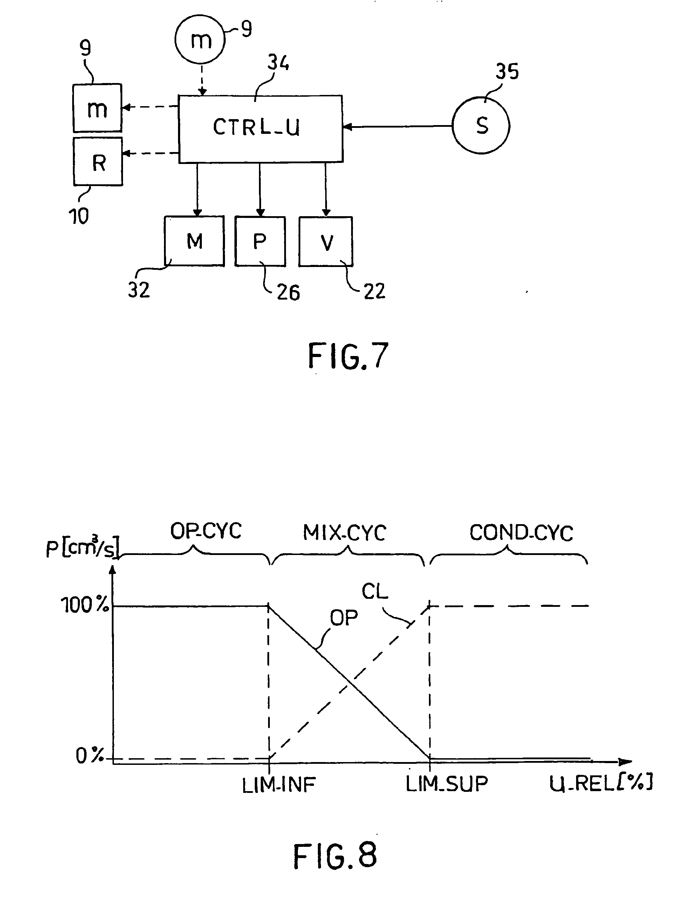

figure 7 is a schematic view of the control system of the drying machine from figures 1 and 2;

figure 8 is a control diagram of the drying machine shown in figures 1 and 2.

With reference to figures 1 to 7, a laundry dryer 1 comprises a housing 2 to accommodate a laundry-collecting basket or drum 3. The basket 3 is provided with an inlet aperture 4 for a drying air flow 5 and an outlet aperture 6 for wet air 7. Said apertures are communicate with a pipeline system with ventilation means associated thereto, for example a fan wheel 8 driven by an electric motor 9, to convey the drying air flow 5, through the inlet aperture 4 to basket 3 and remove wet air 7 therefrom through the outlet aperture 6.

There are also provided suitable heating means being set in a heat-exchange relation with drying air 5, for example an electric resistance 10, arranged within the air flow 5 upstream of the inlet aperture 4 and suitable to heat the air 5 before it enters the basket 3.

Condensing means, such as a heat exchanger, are associated to said pipeline system and are suitable to dehumidify the wet air 7 removed from the basket 3.

Advantageously, the laundry drying machine 1 further comprises moving means for the basket 3 such as to cause the laundry to spin and swirl while being exposed to the drying air flow 5. These means comprise for example an electric motor (not shown) rotating the basket 3, preferably in directions which can be alternated.

The pipeline system comprises an intake opening 11 to draw in ambient air 12 from outside the housing 1 and a release opening 13 for releasing the air in the environment and it defines, i.e. provides, inside the housing 1:
- an open circuit 16, 15, 14, 17 allowing the ventilation means 8, 9 to draw in the air from the environment, convey it to the basket 3 and remove it therefrom to be released again to the environment, and the heating means 10 to heat the air drawn in before it enters the basket 3 (open circuit) and
- a closed circuit 15, 16 allowing the ventilation means 8, 9 to convey the air to the basket 3 and remove it therefrom to be conveyed again to the basket 3, the heating means 10 to heat the air before it enters the basket 3 and the condensing means 20, 21, 22 to dehumidify the air before it is heated (closed circuit), wherein switching means 18, 19 are provided to selectively convert said pipeline system to said first and second circuits.

In accordance with an embodiment, said switching means allow to selectively operate the drying machine, either by means of said open circuit or by means of said closed circuit.

In accordance with a further embodiment, the switching means can be adjusted such as to allow the machine to be simultaneously operated by means of said open circuit and said closed circuit, wherein the relation between the flow rates in the open circuit and in the closed circuit can be preferably adjusted and set as desired.

The pipeline system comprises an air removal pipe 14 in fluid communication with the outlet aperture 6 of basket 3, a delivery pipe 15 in fluid communication with the inlet aperture 4 of basket 3, an intake pipe 16 in fluid communication with the intake opening 11 and a release pipe 17 in fluid communication with the release opening 13.

In accordance with an embodiment of the invention, the air removal pipe 14 is put in fluid communication with the delivery pipe 15 by interposing a delivery flow regulator 18, suitable to adjust the flow passage between the air removal 14 and delivery 15 pipes and the air removal pipe 14 is put in fluid communication with the release pipe 17 by interposing a release flow regulator 19, suitable to adjust the flow between the air removal 14 and release 17 pipes. On the other hand, the delivery pipe 15 is put in fluid communication with the intake pipe 16 by interposing a intake flow regulator 18 suitable to adjust the flow passage between the intake 16 and delivery 15 pipes.

In accordance with an embodiment of the invention, said delivery 18, intake 18 and release 19 flow regulators can be operated either independently from one another or depending on one another by suitable automatic operating means, such as one or more electric driving motors 32.

In accordance with the embodiment shown in the figures, the delivery flow regulator 18 and the intake flow regulator 18 are united in one delivery flow deflector 18, suitable to put the delivery pipe 15, in fluid connection either with the air removal pipe 14 or the intake pipe 16, as desired.

Advantageously, the delivery flow deflector 18 is suitable to set up (i.e. to compose) the air flow supplied to the delivery pipe 15, by adjusting the individual flow rates of the air flows from the air removal 14 and intake 16 pipes.

In accordance with a further embodiment of the invention, there is provided only one deflector (not shown in the figures), which is suitable to compose the air flow supplied to the delivery pipe 15 by adjusting the individual flow rates of the air flows from the air removal 14 and intake 16 pipes, wherein said deflector is further suitable to deflect directly to the release pipe 17 that portion of the air flow from the air removal pipe 14 which is not supplied to the delivery pipe 15.

Advantageously, the condensing means are embodied by a heat exchanger 20, 21, 22 arranged along the path of the air removal pipe 14 which is preferably the housing thereof.

On the other hand, the heating resistance 10 is arranged along the path of the delivery pipe 15, preferably being housed therein.

According to an embodiment, the air removal pipe 14, made in a tubular structure, of a preferably rectangular section in plastic carrying a lint filter 33, extends from the outlet aperture 6 of basket 3 preferably towards the dryer lower portion 1, where said pipe 14 defines a condensing chamber 20 provided with a cool water tank 21 that can be supplied from the water system by means of a suitable aperture, preferably a spraying nozzle or nebulizer 22 being arranged in the wall of the air removal pipe 14 above a maximum water level 24. The tank 21 acts both as a container for the cold water from the water system which cools the air removed by the basket 3 thus condensing the moisture thereof, and as a condensate collection tank.

At the lowermost point of the tank 21 there is provided an outlet 25 associated to suitable drainage means, such as a pump 26 suitable to discharge preferably sequentially or intermittently either the whole or part of the liquid contained within the tank 21 in order to maintain or contain said maximum water level 24.

Alternatively, there can be provided a conventional air/air condenser, in which a suitable fan wheel, advantageously driven by the control unit similarly to the above control of the spraying nozzle 22 and drainage pump 26, conveys a cooling air flow which cools the air removed from the basket 3 thus condensing the moisture thereof.

The air removal pipe 14, particularly a portion thereof located downstream of the condensing chamber 20, as seen in the air flow direction, opens into said delivery commutator 18 which comprises, besides the fluid connection to the air removal pipe 14, a fluid connection to the delivery pipe 15 and one to the intake pipe 16,

Advantageously, the delivery commutator 18 comprises a housing 27, preferably of a cylindrical or conical shape, which is equipped with three apertures 28, 29, 30 being provided at different locations and forming the three above connections, as well as a shutter element 31, also of an at least partially cylindrical or conical shape being rotatably accommodated within the housing 27.

The shutter element 31, according to its angular position relative to the housing 27 of the delivery commutator 18, is suitable to adjust the opening/closure, respectively, of the fluid connections (apertures 28, 29, 30) of the delivery commutator 18 to the intake 16 and air removal 14 pipes and deviate the respective air flows to the delivery pipe 15.

The delivery pipe 15 extends from the delivery commutator 18 to the inlet aperture 4 of basket 3.

Advantageously, the fan wheel 8 is arranged within that part of the delivery pipe 15 immediately adjoining the delivery commutator 18, and preferably the rotation axes of motor 9 and of fan wheel 8 coincide with the rotation axis of adjustment of the shutter 31.

The heating resistance 10 is arranged in the delivery pipe 15 downstream of the fan wheel 8 as seen from the air flow direction.

The intake pipe 16, being formed by a suitable plastic tube or suitable spaces provided within the housing 2 of the drying machine 1 extends from the intake opening 11 (which can be provided as a single aperture, grid, or a plurality of apertures within the housing 2) to the aperture 29 of the delivery commutator 18, thus providing the supply of cool air 12 from the external environment.

The release pipe 17, which is formed by a suitable plastic tube or suitable spaces provided within the housing 2 of the drying machine 1 extends from a flow regulator 19 connected to the air removal pipe 14, preferably in an area thereof downstream of the condensing chamber 20, to the release opening 11 (which can be provided for example as a single aperture, grid, or a plurality of apertures within the housing 2).

Advantageously, the flow regulator 19 comprises a housing, preferably of a cylindrical or conical shape, provided with two apertures forming the fluid communication between the air removal pipe 14 and the release pipe 17, as well as a shutter element, also having an at least partially cylindrical or conical shape, being rotatably accommodated within the housing.

The shutter element, according to its angular position relative to the housing of the flow regulator, is suitable to adjust the opening/closure, respectively, of the fluid connection between the air removal 14 and release 17 pipes, thus adjusting the air flow released outside the drying machine 1.

According to an embodiment, both the delivery commutator 18 and the regulator 19 of the discharge flow can be automatically adjusted by suitable driving means, for example one or more electric regulating motors 32 to be controlled by a control unit 34 of the drying machine 1.

Advantageously, the drying machine 1 comprises sensing means 35 detecting the air moisture in the environment outside the washing tank 3. Said sensing means 35 comprise a moisture sensor 35 being arranged at the housing 2, preferably at the intake opening 11. The moisture sensor 35, preferably a digital hygrometer suitable to measure the relative moisture of the air outside the basket/tank unit 3, is connected to the control unit 34, such as a microcomputer suitable to compare the data supplied by sensor 35 with the comparative values advantageously obtained by suitable work tables or curves being stored and adapted to the various drying programs. The control unit 34 is in turn connected to the electric motor 32 driving the switching means 18, 19 (and, advantageously, also with the condensing means, particularly with the spraying nozzle 22) and allows to adjust the electric supply thereof based on the sensor data 35 i.e. the result of the comparison between the sensor data 35 and the comparative values stored.

The control unit 34 can be herein either a single centralized component or a plurality of decentralized units, for example consisting of several control devices directly associated to the motor or motors 32, thereby a data processing part can be carried out in a centralized manner, whereas another data processing part is directly carried out for example by the sensor device 35 or the control circuit of motor 32.

The control unit 34 compares a moisture value U_REL measured by sensor 35 with a reference lower threshold value LIM_INF and, in the case where the measured moisture value U_REL is lower than the lower threshold value LIM _INF, it influences, by means of motor 32, the flow regulators 18, 19 such as to release all the air 7 removed from the drying space (i.e. from the basket 3) to the external environment and draw in a corresponding amount of air from the external environment to form the drying air flow 5.

In the case where the measured moisture value U_REL is greater than the lower threshold value LIM_INF, the control unit 34 drives the flow regulators 18, 19 and the condensing means 20, 21, 22, 26 such as to extract at least a part of the moisture from the air 7 removed from basket 3 and, after at least a part of moisture has been extracted therefrom, reintroduce at least a part of the air 7 removed by the basket 3 to the drying air flow 5.

Advantageously, the control unit 34 further compares the measured moisture value U_REL with a reference upper threshold value LIM_SUP greater than the lower threshold value LIM_INF and, in the case where the measured moisture value U_REL is greater than the upper threshold value LIM_SUP, the control unit 34 drives the flow regulators 18, 19 and the condensing means 20, 21, 22, 26 such as to reintroduce substantially all the air 7 removed by the drying space (basket 3), after at least a part of moisture has been extracted therefrom, to the drying air flow 5.

In accordance with an embodiment, when the measured moisture U_REL ranges between the lower threshold value LIM_INF and the upper threshold value LIM_SUP, the amount of the air released to the external environment and the amount of the air 12 drawn in from the external environment will be reduced and the amount of the air 7 removed from the basket 3 and introduced again in the drying air flow 5 will be increased in a substantially continuous manner, preferably proportionate to the increase in the measured moisture value U_REL, as can be seen for example in the diagram shown in Figure 8.

Advantageously, in the case where said measured moisture value U_REL ranges between the lower threshold value LIM_INF and the upper threshold value LIM_SUP, the extraction of moisture from the air removed from the drying space will be also increased, preferably substantially proportionate to the increase in the measured moisture value U_REL.

The operation of the dryer 1 according to the invention is described below.

In the case where the drying machine 1 is installed in a well ventilated room (U_REL < LIM_INF e U_REL < LIM_SUP) which allows the vapour to be released from the drying machine 1, the control unit 34, following the comparison between the value of the external moisture U_REL being measured by sensor 35 and the lower LIM_INF and upper LIM_SUP threshold values switches the drying machine 1, by means of the motors 32, to an open circuit operation mode, such as illustrated in Figures 1 and 2.

The ambient air is drawn in through the intake opening 11 and conveyed by the fan wheel 8 along the intake duct 16, through the delivery commutator 18 into the delivery pipe 15, inside which the air is heated by the resistance 10 before entering the basket 3 where it causes the moisture contained in the laundry to evaporate. Wet air is removed by the basket 3 through the outlet aperture 6 and conveyed along the air removal pipe 14, through the flow regulator 19 open on the release pipe 17, and it is released outside the drying machine 1 through the release opening 13.

In this construction, the delivery commutator 18 prevents that the air from the air removal pipe 14 may be drawn in to the delivery pipe 15, as it can be seen for example in Figure 6.

In the case where the drying machine 1 is installed in a room with poor ventilation (U_REL > LIM_INF e U_REL > LIM_SUP) which requires the drying air to be dehumidified within the drying machine 1, the control unit 34, following the comparison between the external moisture value U_REL as measured by sensor 35 and the lower LIM_INF and upper LIM_SUP threshold values, switches the drying machine 1, by means of the motors 32, to a closed-circuit (i.e. condensing) operation, such as illustrated in Figures 3 and 4.

The wet air removed from basket 3 through the outlet aperture 6 is drawn by the fan wheel 8, through the lint filter 33, in the air removal pipe 14, by flowing therein through the condensing chamber 20.

Cool water drawn from the water system is supplied by the spraying nozzle 22, which is preferably provided with a solenoid valve controlled by the control unit 34, directly to the air removal pipe 14 thus forming a cold fog therein, particularly in the condensing chamber 20, and is collected in the tank 21 thus forming a cold water surface over substantially the whole widened area of the air removal pipe 14, i.e. the whole condensing chamber 20.

Wet air, is cooled both by the cold fog and the cold water surface while flowing through the condensing chamber 20, and it is dehumidified by condensing the moisture. The condensate is collected in the tank 21 containing the cooling water and is sequentially discharged therewith out of the drying machine 1.

The dehumidified air is conveyed from the air removal pipe 14, through the delivery commutator 18, to the delivery pipe 15, where it is heated again by resistance 10 before being resent to basket 3.

In this configuration, the delivery commutator 18 prevents both that the air is drawn in from the intake pipe 16 to the delivery pipe 15 and that the air is released from the air removal pipe 14 to the release pipe 17, as can be seen for example in Figures 4 and 5.

In the case where the drying device installation room is provided with such a ventilation allowing to drain a vapour amount sufficient for drying but not sufficient for operating an open circuit drying machine (U_REL > LIM_INF e U_REL < LIM_SUP), the control unit 34, subsequent to the comparison between the external moisture value U_REL as measured by sensor 35 and the lower LIM_INF and upper LIM_SUP threshold values switches the drying machine 1, by operating the motors 32, to a hybrid operation, in which the delivery flow drawn in the delivery pipe 15 is composed of two flows having a controlled rate, by means of the delivery commutator 18. A first flow consists of ambient air drawn in from outside the drying machine 1 through the intake pipe 16 and a second flow consists of recycled dehumidified air drawn in from the air removal pipe 14. The excess air in the air removal pipe 14 is released out of the drying machine through the release pipe 17.

In accordance with an embodiment, the filter 33 is inserted into and extends along the length 14 of the vertical flow path, and the flow path length itself at least partially defines the condensing chamber 20 and the water collection tank 21.

In accordance with a particularly advantageous development of the inventive drying method, there is provided the step of varying the rate of the drying air flow 5, preferably as a function of a previously measured parameter, for example as a function of the air moisture U_REL outside the drying space. Advantageously, this allows to compensate for a poor capacity of absorbing the air moisture (which can be identified through a high relative moisture value, i.e. air saturation degree) by increasing the rate of the drying air flow 5 and, accordingly, by increasing the volume of air skimming the laundry to be dried.

To the purpose, the control unit 34 of the drying machine is suitable to compare the data supplied by sensor 35 with comparative values advantageously obtained by suitable working tables or curves being stored and adapted to the various drying programs. The control unit 34 is in turn connected to the electric motor 9 driving the fan wheel 8 to adjust the power supply of said motor 9 based on the data of sensor 35, i.e. the result of the comparison of the data of sensor 35 with the comparative values stored.

Alternatively or in addition to changing the rate of drying air flow as a function of the external moisture, the drying method can provide the further step of changing the speed (i.e. the rate) of the drying air flow 5 as a function of the pressure or rate of this drying air flow 5 upstream of the inlet aperture 4 of basket 3, i.e. the drying space.

To the purpose, the drying device comprises sensing means suitable to detect a quantity indicative of pressure or rate of air flow 5 upstream of the inlet aperture 4.

The sensing means comprise for example a pressure sensor connected to the control unit 34 which is suitable to compare the data supplied by the pressure sensor with the comparative values, which are advantageously obtained by suitable work tables or curves being stored and adapted to the various drying programs. The control unit 34 is in turn connected to motor 9 of fan wheel 8 and adjusts the power supply thereof based on the data of the pressure sensor, i.e. the result of the comparison of the data of pressure sensor with the comparative data stored.

For example, a pressure increase upstream of the inlet aperture 4, which is indicative of a stagnation of air flow 5 due for example to the inlet aperture 4 being obstructed by a piece of laundry, can be detected and identified as such by the pressure sensor and the control unit 34, which can either increase the supply to the ventilator means 8, 9 to quickly clear the inlet aperture 4 by a high air thrust, thus actively reestablishing a high-efficiency drying condition, or reduce the supply to the ventilation means 8, 9 in order to reduce the energy consumption of the latter during the inefficient drying step, until the inlet aperture 4 is cleared, such as for example by the motion of basket 3 or the laundry weight.

In accordance with a further embodiment of the invention, the control unit 34 is advantageously suitable to reduce or cut-off the power supply to the resistance 10 until the pressure detected by the pressure sensor returns to the normal value, i.e. a value indicating a normal or high drying efficiency.

In accordance with an advantageous embodiment, such as illustrated in the figures, the sensing means for measuring the rate or pressure of the drying air flow 5 are provided through the electric motor 9 of the fan wheel 8 conveying the drying air 5. This motor 9 is for example a brushless, induction asynchronous motor or a collector motor, the speed and torque of which vary as a function of the working point of the fan wheel 8, which depends in turn on the actual inlet aperture 4 of basket 3.

By knowing that, when the aperture 4 is obstructed, the pressure upstream of the aperture 4 will be increased and the air rate will be decreased, and hence the number of motor revolutions will be increased whereas its torque will be decreased, either the number of revolutions of the fan wheel 8 or electric parameters of the motor 9 itself can be used, particularly the frequency/voltage ratio (Hz/V), as the quantity indicative of the pressure or rate of air flow 5 upstream of the inlet aperture 4.

The rotor rotational speed can be measured for example by means of an encoder, whereas the electric quantities can be detected by suitable sensing means being associated to the motor 9 or included in the control device of motor 9 or in the electronics of control unit 34.

Consequently, the control unit 34 receives signals relative to the electric parameters detected at motor 9 and processes them similarly to what has been stated above.

The invention can be advantageously implemented both in front-loading and top-loading drying machines and washer-dryers.

The invention entails considerable advantages. First of all, this drying method can be implemented in a single equipment that can be adapted to said several operating types (open circuit, closed circuit, combined circuit), in which, in the open circuit operating mode, the dehumidifying means 20, 21, 24, 25, 26, i.e. the condensing system is normally deactivated but it may also be activated, for example in a controlled manner by means of the dryer control unit 34, in order to reduce the moisture load in the air released in the environment in a controlled manner.

The laundry drying machine has a very simple and solid structure, in which the closed circuit 14, 15 forms a portion of open circuit 14, 15, 16, 17, i.e. both circuits have the delivery pipe 14 and the air removal pipe 14 in common. This makes manufacture and maintenance of the appliance easier and cost-effective.

Due to the commutability between the open drying and closed condensing configurations, and the control of respective air flows as a function of the external air moisture, the drying machine can be easily and automatically adapted to various installation rooms (as well as environmental condition changes even occurring in the course of a drying operation) and provides a high drying performance, by fully exploiting the moisture-disposal capacity of the installation environment.

With this invention, it is thus possible to save resources (both of material and energy) both in the manufacturing step and while using the appliance.

Obviously, to the drying method and laundry drying machine according to the present invention, aiming at satisfying contingent and specific needs, those skilled in the art will be able to carry out further modifications and variants, all of them being contemplated within the scope of protection of the invention, such as defined in the claims below.

## Claims

1. A method for drying wet laundry contained in a drying space (3) being at least partially isolated from an external environment, comprising the steps of:
- conveying a drying air flow (5) into the drying space (3) such that said drying air (5) skims the laundry to be dried to extract at least a part of its moisture ;
- removing wet air (7) from the drying space (3);
- measuring the moisture (U_REL) of the air in the external environment;
**characterised by**
- adjusting, as a function of the measured moisture (U_REL), the rate of a recirculated air flow consisting of at least a part of the air (7) removed from the drying space (3) and reintroduce said recirculated air flow, after it has been at least partially dehumidified, to the drying air flow (5).

2. The method according to claim 1, comprising the steps of:
- comparing the measured moisture value (U_REL) with a reference lower threshold value (LIM_INF) and in the case where the measured moisture value (U_REL) is lower than the lower threshold value (LIM_INF),
- releasing all the air (7) removed from the drying space (3) to the external environment and drawing in a corresponding amount of air (12) from the external environment to constitute the drying air flow (5) and in the case where the measured moisture value (U_REL) is higher than the lower threshold value (LIM_INF),
- extracting at least a part of the moisture from the air (7) removed from the drying space (3), and
- reintroducing at least a part of the air (7) removed from the drying space (3), after at least a part of the moisture has been extracted therefrom, to the drying air flow (5).

3. The method according to claims 1 or 2, comprising the steps of:
- comparing the measured moisture value (U_REL) to a reference upper threshold value (LIM_SUP), which upper threshold value (LIM_SUP) is higher than the lower threshold value (LIM_INF), and
in the case where the measured moisture value (U_REL) is higher than the upper moisture value (LIM_SUP),
- reintroducing substantially all the air (7) removed from the drying space (3), after at least a part of moisture has been extracted therefrom, to the drying air flow (5).

4. The method according to any one of the preceding claims, wherein in the case where said measured moisture value (U_REL) ranges between the lower threshold value (LIM_INF) and the upper threshold value (LIM_SUP),
- the amount of air released to the external environment and the amount of air (12) drawn in from the external environment are reduced and
- the amount of air (7) removed from the drying space (3) and reintroduced to the drying air flow (5) is increased upon the increase in the measured moisture value (U_REL).

5. The method according to any one of the preceding claims, wherein in the case where said measured moisture value (U_REL) ranges between the lower threshold value (LIM_INF) and the upper threshold value (LIM_SUP), the extraction of moisture from the air (7) removed from the drying space (3) is increased upon the increase in the measured moisture value (U_REL).

6. The method according to any one of the preceding claims, wherein in the case where said measured moisture value (U_REL) ranges between the lower threshold value (LIM_INF) and the upper threshold value (LIM_SUP),
- the amount of air released to the external environment and the amount of air (12) drawn in from the external environment are reduced and
- the amount of air (7) removed from the drying space (3) and reintroduced to the drying air flow (5) is increased substantially proportionate to the increase in the measured moisture value (U_REL).

7. The method according to any one of the preceding claims, wherein, in the case where said measured moisture value (U_REL) ranges between the lower threshold value (LIM_INF) and the upper threshold value (LIM_SUP), the extraction of moisture from the air (7) removed from the drying space (3) is increased substantially proportionate to the increase in the measured moisture value (U_REL).

8. The method according to any one of the preceding claims, comprising the step of heating the drying air (5) before it enters the drying space (3).

9. The method according to any one of the preceding claims, comprising the step of changing the rate or speed of the drying air flow (5) as a function of the measured moisture (U_REL).

10. The method according to any one of the preceding claims, comprising the steps of:
- measuring a parameter indicative of the rate or speed of the drying air flow (5) upstream of the inlet (4) of said drying air flow (5) into the drying space (3);
- changing the rate or speed of the drying air flow (5) as a function of the pressure or rate of the drying air flow (5).

11. The method according to any one of the preceding claims, comprising the step of heating the drying air (5) before it enters the drying space (3) in a controlled manner, by adjusting said heating of the drying air (5) as a function of the pressure or rate of the drying air flow (5) and/or moisture (U_REL) outside the drying space .

12. A laundry drying machine (1) defining a drying space (3) at least partially isolated from an external environment and comprising:
- means (15, 8, 9) to convey a drying air flow (5) into the drying space (3) such that said drying air (5) skims the laundry to be dried in order to extract at least a part of moisture therefrom;
- means (14, 8, 9) to remove wet air (7) from the drying space (3);
- means (35) to measure the moisture (U_REL) of the air in the external environment;
- means (20, 21, 22) to at least partially dehumidify said recirculated air flow;
- means (15, 20, 8, 9) to reintroduce said recirculated air flow, after it has been at least partially dehumidified, to the drying air flow (5),
**characterized by**
- means (34, 32, 18, 19) suitable to adjust, as a function of the measured moisture (U_REL), the rate of a recirculated air flow consisting of at least a part of the air (7) removed from the drying space (3).

13. The laundry drying machine (1) according to claim 12, comprising a support and housing structure (2) carrying a basket or drum (3) to accommodate the laundry, said basket (3) being in communication with a pipeline system (14, 15, 16, 17) with ventilator means (8, 9) being associated thereto to convey a drying air flow (5) into the basket (3) and remove the wet air (7) from the latter, heating means (10) set in a heat-exchange relation with the drying air (5), condensing means (20, 21, 22) suitable to dehumidify the wet air (7) removed from basket (3), wherein there are provided switching means (18, 19) suitable to selectively convert said pipeline system (14, 15, 16, 17) at least between:
- an open circuit (16, 15, 14, 17) allowing the ventilation means (8, 9) to draw in the air from the environment, convey it to the basket (3) and remove it therefrom to release it again to the environment, and the heating means (10) to heat the air drawn in before it enters the basket 3, and
- a closed circuit (15, 16) allowing the ventilation means (8, 9) to convey the air to the basket (3) and remove it therefrom to convey it again to the basket (3), the heating means (10) to heat the air before it enters the basket (3) and the condensing means (20, 21, 22) to dehumidify the air before it is heated, wherein there are provided command and control means (32, 34, 35) suitable to automatically adjust said switching means (18, 19) as a function of the air moisture (U_REL) outside the basket (3).

14. The laundry drying machine (1) according to claim 12 or 13, comprising means for adjusting the rate or speed of the drying air flow (5) as a function of the moisture (U_REL) of the air outside the basket (3).

15. The laundry drying machine (1) according to one of claims 12 to 14, comprising means for adjusting the rate or speed of the drying air flow (5) as a function of the pressure or rate of the drying air flow (5) upstream the inlet aperture (4) of basket (3).

16. The laundry drying machine (1) according to any claim 12 to 15, comprising sensing means (8, 9) suitable to measure a quantity indicative of the pressure or rate of the air flow (5) upstream of the inlet aperture (4) of basket (3), said sensing means (8, 9) being connected to said control unit (34) suitable to affect, as a function of said measured quantity, the rate of the drying air flow (5) being provided by ventilation means (8, 9) and/or the heating power of the heating means (10).

17. The laundry drying machine (1) according to any claim 12 to 16, being a washer-dryer, a drying machine or a drying wardrobe.

## Patentansprüche

1. Verfahren zum Trocknen feuchter Wäsche, die in einem Trocknungsraum (3) enthalten ist, der zumindest teilweise gegen eine Außenumgebung isoliert ist, das die Schritte umfasst:
- Zuführen einer trocknenden Luftströmung (5) in den Trocknungsraum (3) so, dass die trocknende Luft (5) die Wäsche, die getrocknet werden soll, überstreicht, um zumindest einen Teil ihrer Feuchtigkeit zu entziehen;
- Entfernen von feuchter Luft (7) von dem Trocknungsraum (3);
- Messen der Feuchtigkeit (U_REL) der Luft in der Außenumgebung;
**gekennzeichnet durch**
- Einstellen, als eine Funktion der gemessenen Feuchtigkeit (U_REL), der Rate einer Strömung aus rezirkulierter Luft, die aus zumindest einem Teil der Luft (7), die von dem Trocknungsraum (3) entfernt ist, besteht, und Wiederzuführen der rezirkulierten Luftströmung, nachdem sie zumindest teilweise entfeuchtet worden ist, zu der trocknenden Luftströmung (5).

2. Verfahren nach Anspruch 1, das die Schritte umfasst:
- Vergleichen des gemessenen Feuchtigkeitswerts (U_REL) mit einem unteren Referenzschwellwert (LIM_INF), und, in dem Fall, bei dem der gemessene Feuchtigkeitswert (U_REL) niedriger als der niedrigere Schwellwert (LIM_INF) ist,
- Freigeben der gesamten Luft (7), die von dem Trocknungsraum (3) entfernt ist, an die Außenumgebung und Anziehen einer entsprechenden Menge an Luft (12) von der Außenumgebung, um die trocknende Luftströmung (5) zu bilden, und in dem Fall, bei dem der gemessene Feuchtigkeitswert (U_REL) höher als der niedrigere Schwellwert (LIM_INF) ist,
- Entziehen zumindest eines Teils der Feuchtigkeit aus der Luft (7), die von dem Trocknungsraum (3) entfernt ist, und
- Wiederzuführen mindestens eines Teils der Luft (7), die von dem Trocknungsraum (3) entfernt ist, nachdem mindestens ein Teil der Feuchtigkeit davon entzogen worden ist, zu der trocknenden Luftströmung (5).

3. Verfahren nach Anspruch 1 oder 2, das die Schritte aufweist:
- Vergleichen des gemessenen Feuchtigkeitswerts (U_REL) mit einem oberen Referenzschwellwert (LIM_SUP), wobei der obere Schwellwert (LIM_SUP) höher als der untere Schwellwert (LIM_INF) ist, und
in dem Fall, bei dem der gemessene Feuchtigkeitswert (U_REL) höher als der obere Feuchtigkeitswert (LIM_SUP) ist,
- Wiederzuführen im Wesentlichen der gesamten Luft (7), die von dem Trocknungsraum (3) entfernt ist, nachdem zumindest ein Teil der Feuchtigkeit davon entzogen worden ist, zu der trocknenden Luftströmung (5).

4. Verfahren nach einem der vorhergehenden Ansprüche, wobei in dem Fall, bei dem der gemessene Feuchtigkeitswert (U_REL) zwischen dem unteren Schwellwert (LIM_INF) und dem oberen Schwellwert (LIM_SUP) liegt,
- die Menge an Luft, die an die Außenumgebung freigegeben ist, und die Menge an Luft (12), die von der Außenumgebung angesaugt wird, reduziert werden, und
- die Menge an Luft (7), die von dem Trocknungsraum (3) entfernt ist und zu der trocknenden Luftströmung (5) wiederzugeführt ist, unter der Erhöhung des gemessenen Feuchtigkeitswerts (U_REL) erhöht wird.

5. Verfahren nach einem der vorhergehenden Ansprüche, wobei in dem Fall, bei dem der gemessene Feuchtigkeitswert (U_REL) zwischen dem unteren Schwellwert (LIM_INF) und dem oberen Schwellwert (LIM_SUP) liegt, die Entziehung der Feuchtigkeit aus der Luft (7), die von dem Trocknungsraum (3) entfernt ist, unter der Erhöhung des gemessenen Feuchtigkeitswerts (U_REL) erhöht wird.

6. Verfahren nach einem der vorhergehenden Ansprüche, wobei in dem Fall, bei dem der gemessene Feuchtigkeitswert (U_REL) zwischen dem unteren Schwellwert (LIM_INF) und dem oberen Schwellwert (LIM_SUP) liegt,
- die Menge der Luft, die an die Außenumgebung freigegeben wird, und die Menge an Luft (7), die von der Außenumgebung angezogen wird, verringert werden, und
- die Menge an Luft (7), die von dem Trocknungsraum (3) entfernt wird und wieder zu der trocknenden Luftströmung (5) zurückgeführt wird, im Wesentlichen proportional zu der Erhöhung des gemessenen Feuchtigkeitswerts (U_REL) erhöht wird.

7. Verfahren nach einem der vorhergehenden Ansprüche, wobei in dem Fall, bei dem der gemessene Feuchtigkeitswert (U_REL) zwischen dem unteren Schwellwert (LIM_INF) und dem oberen Schwellwert (LIM_SUP) liegt, die Entziehung der Feuchtigkeit aus der Luft (7), die von dem Trocknungsraum (3) entfernt ist, im Wesentlichen proportional zu der Erhöhung des gemessenen Feuchtigkeitswerts (U_REL) erhöht wird.

8. Verfahren nach einem der vorhergehenden Ansprüche, das den Schritt eines Erwärmens der trocknenden Luft (5), bevor sie in den Trocknungsraum (3) eintritt, aufweist.

9. Verfahren nach einem der vorhergehenden Ansprüche, das den Schritt eines Änderns der Rate oder der Geschwindigkeit der trocknenden Luftströmung (5) als eine Funktion der gemessenen Feuchtigkeit (U_REL) aufweist.

10. Verfahren nach einem der vorhergehenden Ansprüche, das die Schritte aufweist:
- Messen eines Parameters, der für die Rate oder die Geschwindigkeit der trocknenden Luftströmung (5) einströmseitig des Einlasses (4) der trocknenden Luftströmung (5) in den Trocknungsraum (3) kennzeichnend ist;
- Ändern der Rate oder der Geschwindigkeit der trocknenden Luftströmung (5) als eine Funktion des Drucks oder der Rate der trocknenden Luftströmung (5).

11. Verfahren nach einem der vorhergehenden Ansprüche, das den Schritt eines Erwärmens der trocknenden Luft (5), bevor sie in den Trocknungsraum (3) eintritt, in einer kontrollierten Art und Weise durch Einstellen der Erwärmung der trocknenden Luft (5) als eine Funktion des Drucks oder der Rate der trocknenden Luftströmung (5) und/oder der Feuchtigkeit (U_REL) außerhalb des Trocknungsraums aufweist.

12. Wäschetrocknungsmaschine (1), die einen Trocknungsraum (3) definiert, der zumindest teilweise gegen eine Außenumgebung isoliert ist, und aufweist:
- Einrichtungen (15, 8, 9), um eine trocknende Luftströmung (5) in den Trocknungsraum (3) so zuzuführen, dass die trocknende Luft (5) die Wäsche, die getrocknet werden soll, überstreicht, um zumindest einen Teil der Feuchtigkeit davon zu entziehen;
- Einrichtungen (14, 8, 9), um feuchte Luft (7) von dem Trocknungsraum (3) zu entfernen;
- Einrichtungen (35), um die Feuchtigkeit (U_REL) der Luft in der Außenumgebung zu messen;
- Einrichtungen (20, 21, 22), um zumindest teilweise die rezirkulierte Luftströmung zu entfeuchten;
- Einrichtungen (15, 20, 8, 9), um die rezirkulierte Luftströmung, nachdem sie zumindest teilweise entfeuchtet worden ist, zu der trocknenden Luftströmung (5) wieder zuzuführen, **gekennzeichnet durch** Einrichtungen (34, 32, 18, 19), die dazu geeignet sind, als eine Funktion der gemessenen Feuchtigkeit (U_REL), die Rate einer rezirkulierten Luftströmung, die aus zumindest einem Teil der Luft (7), die von dem Trocknungsraum (3) entfernt ist, besteht, einzustellen.

13. Wäschetrocknungsmaschine (1) nach Anspruch 12, die umfasst: eine Trage- und Gehäusestruktur (2), die einen Korb oder eine Trommel (3) trägt, um die Wäsche aufzunehmen, wobei der Korb (3) mit einem Rohrleitungssystem (14, 15, 16, 17) mit Ventilatoreinrichtungen (8, 9), die dazu zugeordnet sind, in Verbindung steht, um eine trocknende Luftströmung (5) in den Korb (3) zu befördern und die feuchte Luft (7) von dem letzterem zu entfernen, Heizeinrichtungen (10), die in einer wärmeaustauschenden Beziehung zu der trocknenden Luft (5) angeordnet sind, Kondensiereinrichtungen (20, 21, 22), die dazu geeignet sind, die feuchte Luft (7), die von dem Korb (3) entfernt ist, zu entfeuchten, wobei Umschalteinrichtungen (18, 19) vorgesehen sind, die dazu geeignet sind, wahlweise das Rohrleitungssystem (14, 15, 16, 17) umzustellen zumindest zwischen
- einem offenen Kreis (16, 15, 14, 17), der zulässt, dass die Ventilationseinrichtungen (8, 9) die Luft von der Umgebung anziehen, sie zu dem Korb (3) befördern und sie davon entfernen, um sie wieder an die Umgebung abzugeben, und dass die Heizeinrichtungen (10) die Luft, die angezogen ist, erwärmen, bevor sie in den Korb (3) eintritt, und,
- einem geschlossenen Kreis (15, 16), der ermöglicht, dass die Ventilationseinrichtungen (8, 9) die Luft zu dem Korb (3) befördern und sie davon entfernen, um sie wieder zu dem Korb (3) zu befördern, dass die Heizeinrichtungen (10) die Luft erwärmen, bevor sie in den Korb (3) eintritt, und dass die Kondensiereinrichtungen (20, 21, 22) die Luft entfeuchten, bevor sie erwärmt wird, wobei Befehls- und Steuereinrichtungen (32, 34, 35) vorgesehen sind, die dazu geeignet sind, automatisch die Umschalteinrichtungen (18, 19) als eine Funktion der Luftfeuchtigkeit (U_REL) außerhalb des Korbs (3) einzustellen.

14. Wäschetrocknungsmaschine (1) nach Anspruch 12 oder 13, die Einrichtungen zum Einstellen der Rate oder der Geschwindigkeit der trocknenden Luftströmung (5) als eine Funktion der Feuchtigkeit (U_REL) der Luft außerhalb des Korbs (3) aufweist.

15. Wäschetrocknungsmaschine (1) nach einem der Ansprüche 12 bis 14, die Einrichtungen zum Einstellen der Rate oder der Geschwindigkeit der trocknenden Luftströmung (5) als eine Funktion des Drucks oder der Rate der trocknenden Luftströmung (5) einströmseitig der Einlassöffnung (4) des Korbs (3) aufweist.

16. Wäschetrocknungsmaschine (1) nach einem der Ansprüche 12 bis 15, die Fühleinrichtungen (8, 9) aufweist, die dazu geeignet sind, eine Größe zu messen, die für den Druck oder die Rate der Luftströmung (5) einströmseitig der Einlassöffnung (4) des Korbs (3) kennzeichnend ist, wobei die Fühleinrichtungen (8, 9) mit der Steuereinheit (34) geeignet verbunden sind, um, als eine Funktion der gemessenen Größe, die Rate der trocknenden Luftströmung (5), die durch die Ventilationseinrichtungen (8, 9) erzielt wird, und/oder der Heizleistung der Heizeinrichtungen (10) zu erzielen.

17. Wäschetrocknungsmaschine (1) nach einem der Ansprüche 12 bis 16, die ein Wäschetrockner, eine Trocknungsmaschine oder ein Trocknungsschrank ist.

## Revendications

1. Procédé destiné au séchage de linge mouillé contenu dans un espace de séchage (3) au moins partiellement isolé d'un environnement extérieur, comprenant les étapes consistant à :
transporter un flux d'air de séchage (5) dans l'espace de séchage (3) de telle sorte que ledit air de séchage (5) effleure le linge à sécher pour extraire au moins une partie de son humidité ;
évacuer l'air humide (7) de l'espace de séchage (3) ;
mesurer l'humidité (U_REL) de l'air dans l'environnement extérieur ;
**caractérisé par** :
l'ajustement, en fonction de l'humidité mesurée (U_REL), du débit du flux d'air recirculé composé d'au moins une partie de l'air (7) évacué de l'espace de séchage (3) et la réintroduction dudit flux d'air recirculé, une fois qu'il a été au moins partiellement déshumidifié, dans le flux d'air de séchage (5).

2. Procédé selon la revendication 1, comprenant les étapes consistant à :
comparer la valeur d'humidité mesurée (U_REL) avec une valeur seuil inférieure de référence (LIM_INF) et dans le cas où la valeur d'humidité mesurée (U_REL) est inférieure à la valeur seuil inférieure de référence (LIM_INF),
libérer tout l'air (7) évacué de l'espace de séchage (3) dans l'environnement extérieur et introduire une quantité correspondante d'air (12) depuis l'environnement extérieur pour constituer le flux d'air de séchage (5) et dans le cas où la valeur d'humidité mesurée (U_REL) est supérieure à la valeur seuil inférieure de référence (LIM_INF),
extraire au moins une partie de l'humidité de l'air (7) retiré de l'espace de séchage (3), et
réintroduire au moins une partie de l'air (7) évacué de l'espace de séchage (3), après qu'au moins une partie de l'humidité en a été extraite, dans le flux d'air de séchage (5).

3. Procédé selon la revendication 1 ou 2, comprenant les étapes consistant à :
comparer la valeur d'humidité mesurée (U_REL) avec une valeur d'humidité supérieure de référence (LIM_SUP), ladite valeur seuil supérieure de référence (LIM_SUP) étant supérieure à la valeur seuil inférieure de référence (LIM_INF), et
dans le cas où la valeur d'humidité mesurée (U_REL) est supérieure à la valeur seuil supérieure de référence (LIM_SUP),
réintroduire sensiblement la totalité de l'air (7) évacué de l'espace de séchage (3), après qu'au moins une partie de l'humidité en a été extraite, dans le flux d'air de séchage (5).

4. Procédé selon l'une quelconque des revendications précédentes, dans lequel dans le cas où ladite valeur d'humidité mesurée (U_REL) est comprise entre la valeur seuil inférieure de référence (LIM_INF) et la valeur seuil supérieure de référence (LIM_SUP),
la quantité d'air libérée dans l'environnement extérieur et la quantité d'air (12) introduite depuis l'environnement extérieur sont réduites, et
la quantité d'air (7) évacuée de l'espace de séchage (3) et réintroduite dans le flux d'air de séchage (5) est accrue par l'augmentation de la valeur d'humidité mesurée (U_REL).

5. Procédé selon l'une quelconque des revendications précédentes, dans lequel dans le cas où ladite valeur d'humidité mesurée (U_REL) est comprise entre la valeur seuil inférieure de référence (LIM_INF) et la valeur seuil supérieure de référence (LIM_SUP), l'extraction de l'humidité de l'air (7) évacué de l'espace de séchage (3) est accrue par l'augmentation de la valeur d'humidité mesurée (U_REL).

6. Procédé selon l'une quelconque des revendications précédentes, dans lequel dans le cas où ladite valeur d'humidité mesurée (U_REL) est comprise entre la valeur seuil inférieure de référence (LIM_INF) et la valeur seuil supérieure de référence (LIM_SUP),
la quantité d'air libérée dans l'environnement extérieur et la quantité d'air (12) introduite depuis l'environnement extérieur sont réduites, et
la quantité d'air (7) évacuée de l'espace de séchage (3) et réintroduite dans le flux d'air de séchage (5) est sensiblement accrue en proportion de l'augmentation de la valeur d'humidité mesurée (U_REL).

7. Procédé selon l'une quelconque des revendications précédentes, dans lequel dans le cas où ladite valeur d'humidité mesurée (U_REL) est comprise entre la valeur seuil inférieure de référence (LIM_INF) et la valeur seuil supérieure de référence (LIM_SUP), l'extraction de l'humidité de l'air (7) évacuée de l'espace de séchage (3) est sensiblement accrue en proportion de l'augmentation de la valeur d'humidité mesurée (U_REL).

8. Procédé selon l'une quelconque des revendications précédentes, comprenant l'étape de chauffage de l'air de séchage (5) avant qu'il entre dans l'espace de séchage (3).

9. Procédé selon l'une quelconque des revendications précédentes, comprenant l'étape de changement du débit ou de la vitesse du flux d'air de séchage (5) en fonction de l'humidité mesurée (U_REL).

10. Procédé selon l'une quelconque des revendications précédentes, comprenant les étapes consistant à :
mesurer un paramètre indicatif du débit ou de la vitesse du flux d'air de séchage (5) en amont de l'entrée (4) dudit flux d'air de séchage (5) dans l'espace de séchage (3) ;
changer le débit ou la vitesse du flux d'air de séchage (5) en fonction de la pression ou du débit du flux d'air de séchage (5).

11. Procédé selon l'une quelconque des revendications précédentes, comprenant l'étape de chauffage de l'air de séchage (5) avant qu'il entre dans l'espace de séchage (3) d'une manière contrôlée, en ajustant ledit chauffage de l'air de séchage (5) en fonction de la pression ou du débit du flux d'air de séchage (5) et/ou de l'humidité (U_REL) à l'extérieur de l'espace de séchage.

12. Sèche-linge (1) définissant un espace de séchage (3) au moins partiellement isolé d'un environnement extérieur et comprenant :
des moyens (15, 8, 9) destinés à transporter un flux d'air de séchage (5) dans l'espace de séchage (3) de telle sorte que ledit air de séchage (5) effleure le linge à sécher afin d'extraire au moins une partie de l'humidité de celui-ci ;
des moyens (14, 8, 9) destinés à évacuer l'air humide (7) de l'espace de séchage (3) ;
des moyens (35) destinés à mesurer l'humidité (U_REL) de l'air dans l'environnement extérieur ;
des moyens (20, 21, 22) destinés à déshumidifier au moins partiellement ledit flux d'air recirculé ;
des moyens (15, 20, 8, 9) destinés à réintroduire ledit flux d'air recirculé, après qu'il a été au moins partiellement déshumidifié, dans le flux d'air de séchage (5),
**caractérisé par** :
des moyens (34, 32, 18, 19) appropriés pour ajuster, en fonction de l'humidité mesurée (U_REL), le débit d'un flux d'air recirculé composé d'au moins une partie de l'air (7) évacué de l'espace de séchage (3) ;

13. Sèche-linge (1) selon la revendication 12, comprenant une structure de support et de logement (2) supportant un panier ou un tambour (3) pour réceptionner le linge, ledit panier (3) étant en communication avec un système de tuyauterie (14, 15, 16, 17) comprenant des moyens de ventilation (8, 9) associé à celui-ci pour transporter le flux d'air de séchage (5) dans le panier (3) et évacuer l'air humide (7) de ce dernier, un moyen de chauffage (10) disposé dans une relation d'échange thermique avec l'air de séchage (5), des moyens de condensation (20, 21, 22) appropriés pour déshumidifier l'air humide (7) évacué du panier (3), dans lequel des moyens de commutation (18, 19) sont prévus, appropriés pour convertir sélectivement ledit système de tuyauterie (14, 15, 16, 17) au moins entre :
un circuit ouvert (16, 15, 14, 17) permettant aux moyens de ventilation (8, 9) d'introduire l'air depuis l'environnement, le transporter dans le panier (3) et l'évacuer de celui-ci pour le réévacuer dans l'environnement, et le moyen de chauffage (10) pour chauffer l'air introduit avant qu'il pénètre dans le panier (3), et
un circuit fermé (15, 16) permettant aux moyens de ventilation (8, 9) de transporter l'air vers le panier (3) et de l'évacuer de celui-ci pour le retransporter vers le panier (3), le moyen de chauffage (10) pour chauffer l'air avant qu'il pénètre dans le panier (3) et les moyens de condensation (20, 21, 22) pour déshumidifier l'air avant qu'il ne soit chauffé, dans lequel des moyens de commande et de contrôle (32, 34, 35) sont prévus, appropriés pour ajuster automatiquement lesdits moyens de commutation (18, 19) en fonction de l'humidité de l'air (U_REL) à l'extérieur du panier (3).

14. Sèche-linge (1) selon la revendication 12 ou 13, comprenant un moyen destiné à ajuster le débit ou la vitesse du flux d'air de séchage (5) en fonction de l'humidité (U_REL) de l'air à l'extérieur du panier (3).

15. Sèche-linge (1) selon l'une quelconque des revendications 12 à 14, comprenant des moyens destinés à ajuster le débit ou la vitesse du flux d'air de séchage (5) en fonction de la pression ou du débit du flux d'air de séchage (5) en amont de l'ouverture d'entrée (4) du panier (3).

16. Sèche-linge (1) selon l'une quelconque des revendications 12 à 15, comprenant des moyens de détection (8, 9) appropriés pour mesurer une quantité indicative de la pression ou du débit du flux d'air (5) en amont de l'ouverture d'entrée (4) du panier (3), lesdits moyens de détection (8, 9) étant raccordés à ladite unité de commande (34) appropriée pour affecter, en fonction de ladite quantité mesurée, le débit du flux d'air de séchage (5) fourni par les moyens de ventilation (8, 9) et/ou la puissance de chauffage du moyen de chauffage (10).

17. Sèche-linge (1) selon l'une quelconque des revendications 12 à 16, étant une machine à laver séchante, un sèche-linge ou une penderie séchante.
